# EUROPÄISCHE PATENTSCHRIFT

(11) **EP 1 763 981 B1**
(45) Veröffentlichungstag und Bekanntmachung des Hinweises auf die Patenterteilung: **10.01.2018**
(21) Anmeldenummer: 06117798.6
(22) Anmeldetag: 25.07.2006
(51) Int. Cl.: A01B 59/041

(54) **Vorrichtung zum Führen eines Arbeitsgerätes**
Device for guiding a working implement
Dispositif de guidage d'un outil de travail

(30) Priorität: 16.09.2005 DE 102005044493
(43) Veröffentlichungstag der Anmeldung: 21.03.2007
(73) Patentinhaber: CLAAS Selbstfahrende Erntemaschinen, 33428 Harsewinkel (DE)
(72) Erfinder: Kleinemenke, Heinrich, 33428, Harsewinkel (DE); Ellermann, Klaus, 32791, Lage (DE); Loebe, Stefan, 88348, Bad Saulgau (DE)

(56) Entgegenhaltungen:
- EP-A- 1 579 750
- DE-A1- 3 915 109
- DE-A1- 4 325 567
- DE-A1- 19 939 967

## Beschreibung

Die Erfindung betrifft eine Vorrichtung zum Führen wenigstens eines über eine verschwenkbare Geräteanbauvorrichtung an einem landwirtschaftlichen Arbeitsfahrzeug gekoppelten Arbeitsgerätes nach dem Oberbegriff des Anspruchs 1.

Aus der DE 43 25 567 ist eine Geräteanbauvorrichtung bekannt, die mit einem Rahmen versehen ist, der um eine vertikale Schwenkachse schwenkbar mit der Hinterachse eines Arbeitsfahrzeugs verbunden ist. Zur Fixierung und Freigabe der Schwenkbewegung des Rahmens um die vertikale Schwenkachse ist zwischen dem Rahmen und der Hinterachse ein manuell betätigter Stabilisator angelenkt, der als längenveränderliches Stellelement ausgeführt ist.

Nachteilig bei dieser bekannten Geräteanbauvorrichtung ist, dass eine Umstellung des Stabilisators und damit eine Fixierung oder Freigabe der Schwenkbewegung nicht automatisch und damit nicht während des Betriebs möglich ist.

Der Erfindung liegt daher die Aufgabe zugrunde, die Nachteile des Standes der Technik zu vermeiden und insbesondere eine Geräteanbauvorrichtung zu schaffen, bei der das Anbaugerät beim Fahren des Arbeitsfahrzeugs abhängig von der Position des Anbaugerätes automatisch seitlich fixiert oder eine Schwenkbewegung um die Schwenkachse freigegeben wird.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Dadurch, dass das Stellglied das Arbeitsgerät seitlich lagefixiert, wenn das Arbeitsgerät wenigstens eine Außerbetriebposition einnimmt und das Stellglied das Arbeitsgerät seitlich in einer Schwimmstellung hält, wenn das Arbeitsgerät eine Arbeitsposition einnimmt, kann die Führung des Arbeitsgerätes automatisch auf den entsprechenden Einsatz während der Fahrt auf dem Feld abgestimmt werden.

Vorteilhafterweise ist die Geräteanbauvorrichtung am landwirtschaftlichen Arbeitsfahrzeug angeordnet, so dass die vertikale Drehachse der Geräteanbauvorrichtung nah am landwirtschaftlichen Arbeitsfahrzeug angeordnet ist und dadurch das Nachlaufverhalten des Arbeitsgerätes optimiert ist.

Dadurch, dass das Stellglied das Arbeitsgerät in einer Solllage seitlich lagefixiert, kann ein schwerkraftbedingtes Schwenken des Arbeitsgerätes zur Mitte beim Anheben des Arbeitsgerätes vermieden werden.

Indem das Stellglied das Arbeitsgerät in der Schwimmstellung innerhalb eines Freigangbereichs seitlich frei pendelnd an der Geräteanbauvorrichtung hält, kann sich das gezogene Arbeitsgerät zum Fahrzeug selbsttätig ausrichten.

Eine besonders einfache und kostengünstige Ausgestaltung der Erfindung ergibt sich, wenn die Geräteanbauvorrichtung mit wenigstens einem Stellglied verschwenkt und/oder lagegesichert wird, wobei das Stellglied als doppelt wirkender Hubzylinder ausgeführt ist.

Eine besonders einfache und daher kostengünstige Ausführung der Erfindung ergibt sich dadurch, dass an dem Hubzylinder ein Weggeber angeordnet, der abhängig von der Hublänge des Hubzylinders ein Wegesignal generiert.

In vorteilhafter Weiterbildung der Erfindung ist das Wegesignal proportional abhängig vom Lagewinkel zwischen der Geräteanbauvorrichtung und dem Fahrzeugrahmen und wird an eine Steuereinheit übertragen, so dass die Steuereinheit die Lage der Geräteanbauvorrichtung bei der Steuerung des Hubzylinders berücksichtigen kann.

Um den Fahrzeugrahmen des landwirtschaftlichen Arbeitsfahrzeugs derart zur Fahrrichtung auszurichten, das sich alle Räder des Fahrzeugs nebeneinander bewegen, weist das landwirtschaftliche Fahrzeug eine Allradlenkung mit einer lenkbaren Vorderachse und einer lenkbaren Hinterachse auf und die Räder beider Achsen sind zusammen in einer Hundeganglenkposition betreibbar.

Damit die Steuerung die gemeinsame Auslenkung der Räder bei der Steuerung des Hubzylinders berücksichtigen kann, wird in der Hundeganglenkposition ein Hundegangwinkel über einen Sensor an der Hinterachse erfasst, wobei der Sensor ein vom Hundgangwinkel proportional abhängiges Hundegangwinkelsignal generiert und das Hundegangwinkelsignal an die Steuereinheit übermittelt wird.

In einer alternativen Ausgestaltung der Erfindung weist das landwirtschaftliche Arbeitsfahrzeug eine vom Bediener betätigbare Lenkeinrichtung auf und in der Hundeganglenkposition erfasst ein Sensor eine Auslenkung der Lenkeinrichtung, wobei der Sensor ein von der Auslenkung der Lenkeinrichtung proportional abhängiges Hundegangwinkelsignal generiert und das Hundegangwinkelsignal an die Steuereinheit übermittelt wird.

In vorteilhafter Weiterbildung der Erfindung sind in der Speichereinheit abhängig vom Hundegangwinkelsignal Solllagen für die Geräteanbauvorrichtung gespeichert, so dass die Ausrichtung der Geräteanbauvorrichtung zum Fahrzeugrahmen individuell an den entsprechend eingestellten Hundegangwinkel erfolgen kann.

Eine einfache Regelung des Hubzylinders ergibt sich, wenn die Steuereinheit die zu dem Hundegangwinkelsignal zugehörige Solllage der Geräteanbauvorrichtung mit dem Lagewinkel zwischen der Geräteanbauvorrichtung und dem Fahrzeugrahmen vergleicht und bei einer Abweichung ein Schwenksignal generiert, wobei das Schwenksignal an eine Hydrauliksteuerung übertragen wird.

Damit die Geräteanbauvorrichtung nicht permanent verschwenkt wird, ist in der Steuereinheit eine maximale Winkelabweichung gespeichert, wobei die Steuerung kein Schwenksignal generiert, wenn die Abweichung zwischen Solllage und tatsächlich ermittelten Lagewinkel unterhalb der maximalen Winkelabweichung liegt.

Um den Schwenkbereich des Arbeitsgerätes individuell anpassen zu können, ist die Steuereinheit mit einer Bedieneinheit verbunden, wobei über die Bedieneinheit der Freigangbereich vorgebbar ist.

Damit das Arbeitsgerät nicht mit dem Ackerschlepper kollidiert, vergleicht die Steuereinheit den vorgegebenen Freigabebereich mit dem Lagewinkel der Geräteanbauvorrichtung und generiert bei einer Überschreitung des Freigangbereichs ein Blockiersignal und überträgt das Blockiersignal an die Hydrauliksteuerung.

Eine einfache und daher kostengünstige Ausgestaltung der Erfindung ergibt sich, wenn die Hydrauliksteuerung durch die in den Hubzylinder ein- und ausströmenden Ölströme die Hublänge des Hubzylinders regelt und dadurch die Geräteanbauvorrichtung in die Solllage verschwenkt oder innerhalb des Freigabebereichs frei pendeln lässt.

Damit die äußere Bahnkurve beim Fahren durch eine Kurve verringert werden kann, ist die Geräteanbauvorrichtung vorteilhafterweise abhängig von einem Lenkeinschlag der Räder des landwirtschaftlichen Arbeitsfahrzeuges verschwenkbar.

Um das Arbeitsgerät auch beim Fahren am Hang und/oder bei ungleichmäßigen Bodenverhältnissen in der Spur des Arbeitsfahrzeuges zu halten, ist die Geräteanbauvorrichtung abhängig von der Drift des Arbeitsgerätes verschwenkbar.

Weitere vorteilhafte Ausgestaltungen sind Gegenstand weiterer Unteransprüche und werden nachfolgend an Hand des in mehrerer Figuren dargestellten Ausführungsbeispiels näher erläutert.

Es zeigen:
Fig.1 eine Seitenansicht eines Ackerschlepper mit einer erfindungsgemäßen Vorrichtung.
Fig.2 eine Draufsicht auf einen Ackerschlepper mit einer erfindungsgemäßen Vorrichtung.
Fig. 3 einen Hydraulikplan der Hydrauliksteuerung der erfindungsgemäßen Vorrichtung.

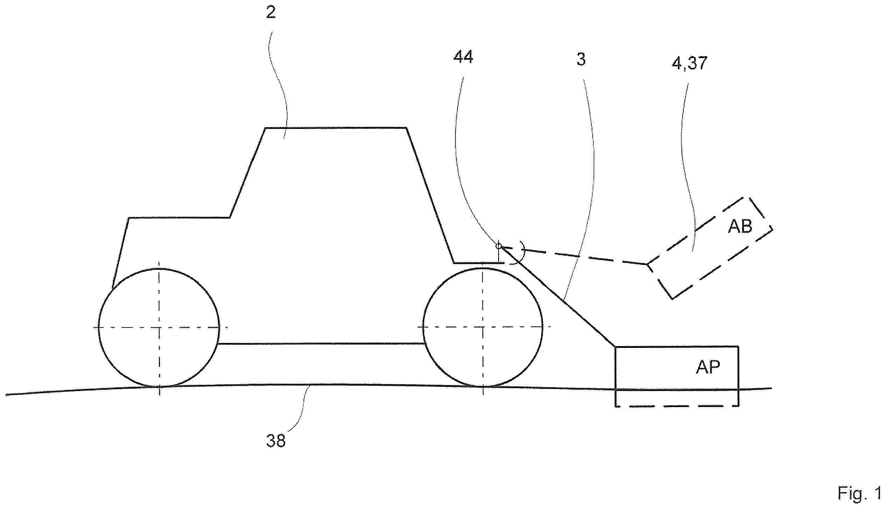

Fig.1 zeigt die Seitenansicht eines als Ackerschlepper 1 ausgeführten landwirtschaftliches Arbeitsfahrzeug 2 bei der Fahrt auf dem Feld. Im Heckbereich des Ackerschleppers 1 ist eine Geräteanbauvorrichtung 3 angeordnet, an die ein Arbeitsgerät 4 angekoppelt ist. Mit der Geräteanbauvorrichtung 3 ist das beispielsweise als Pflug 37 ausgeführte Arbeitsgerät 4 aus einer Arbeitsposition AP, in der der Pflug in den Feldboden eingreift in eine Außerbetriebsposition AB, in der der Pflug 37 oberhalb des Feldbodens 38 gehalten wird, anhebbar und umgekehrt wieder absenkbar. Die Position des Arbeitsgerätes 4 wird über einen Lagesensor 44 erfasst.

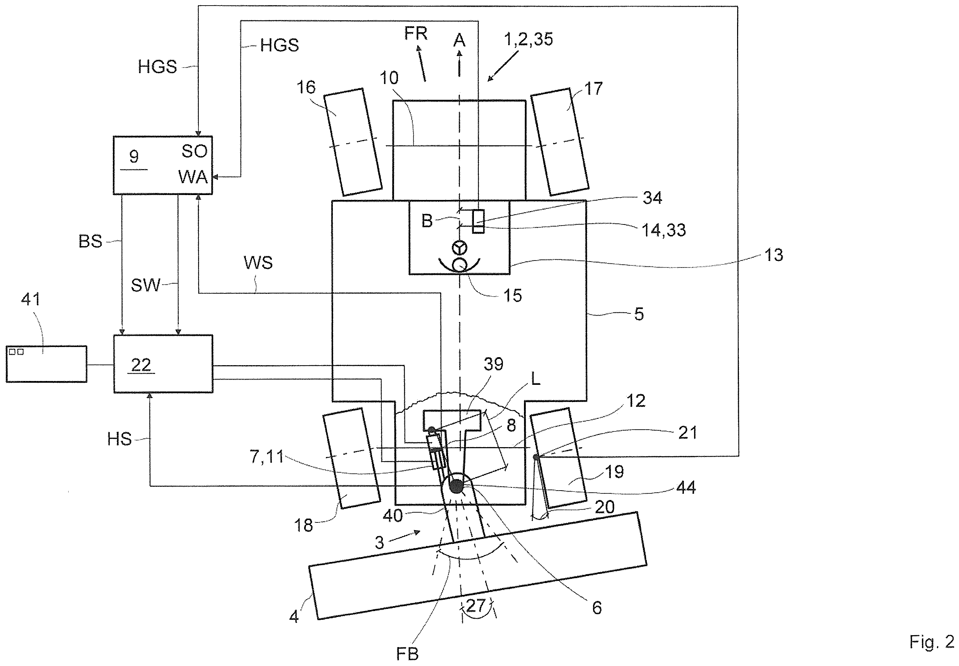

In Fig. 2 ist eine Draufsicht des Ackerschleppers 1 mit dem an die Geräteanbauvorrichtung 3 angekoppelten Arbeitsgerät 4 dargestellt. Die Geräteanbauvorrichtung 3 angeordnetem Arbeitsgerät 4 auf.

Die Geräteanbauvorrichtung 3 weist einen starr mit dem Fahrzeugrahmen 5 des Ackerschleppers 1 verbundenen Teilrahmen 39 und einen um eine vertikale Drehachse 6 drehbaren Schwenkrahmen 40 auf, wobei zwischen dem Teilrahmen 39 und dem Schwenkrahmen 40 ein als doppelt wirkender Hubzylinder 7 ausgeführtes Stellglied 11 angelenkt ist. Mit dem Hubzylinder 7 wird das am Schwenkrahmen 40 angeordnete Arbeitsgerät 4 erfindungsgemäß auf an späterer Stelle näher erläuterte Weise seitlich lagefixiert, wenn das Arbeitsgerät 4 eine Außerbetriebsposition AB (Fig.1) einnimmt und in einer Schwimmstellung seitlich gehalten, wenn das Arbeitsgerät 4 eine Arbeitsposition AP (Fig. 1) einnimmt.

Innerhalb des Hubzylinders 7 ist ein Weggeber 8 angeordnet, der ein Wegsignal WS generiert, dass proportional abhängig von der Hublänge L des Hubzylinders 7 und damit auch proportional zum tatsächlichen Lagewinkel 27 zwischen der Geräteanbauvorrichtung 3 und dem Fahrzeugrahmen 5 ist. Die Wegsignale WS werden an eine Steuereinheit 9 übermittelt. Auch die von dem Lagesensor 44 generierten Höhensignale HS werden an die Steuereinheit 9 übermittelt.

Es ist denkbar, das mehrere Hubzylinder zwischen dem Fahrzeugrahmen 5 und dem Schwenkrahmen 40 angelenkt sind, die das Arbeitsgerät 4 gemeinsam halten.

Der Ackerschlepper 1 weist eine Allradlenkung auf, mit der die lenkbare Vorderachse 10 und die lenkbare Hinterachse 12 unabhängig voneinander als auch miteinander gekoppelt lenkbar sind.

Innerhalb der Kabine 13 des Ackerschleppers 1 ist ein Joystick 14 angeordnet, mit dem der Bediener 15 eine automatische Verschwenkung sowohl der Räder 16, 17, der Vorderachse 10 zusammen mit den Rädern 18, 19 der Hinterachse 12 gleichsinnig um einen Hundegangwinkel 20 aktiviert . Durch die Verschwenkung der Räder 16, 17, 18, 19 ändert sich die Ausrichtung A des Fahrzeugrahmens 5 zur Fahrtrichtung FR. Die veränderbare Ausrichtung A des Fahrzeugrahmens 5 hat den Vorteil, dass der Ackerschlepper 1 in einer Hundeganglenkposition 35 betreibbar ist, bei der der Ackerschlepper 1 im sogenannten Hundegang über das Feld fahren kann. In der Hundeganglenkposition 35 sind die Räder 16, 17, 18, 19 des Ackerschleppers 1 bezüglich der Fahrtrichtung FR nebeneinander angeordnet, so dass jedes Rad 16, 17, 18, 19 eine eigene Fahrspur aufweist und dadurch der Feldboden durch einmaliges Überfahren weniger verdichtet wird.

Die Hundegangwinkel 20 wird über einen Sensor 21 an der Hinterachse 12 erfasst, der proportional abhängig vom Hundegangwinkel 20 ein Hundegangwinkelsignal HGS generiert, das ebenfalls an die Steuereinheit 9 übertragen wird.

Bei einer alternativen Ausführung der Vorrichtung ist an der als Joystick 14 ausgeführten Lenkeinrichtung 33 ein Sensor 34 angebracht, der die Auslenkung B des Joysticks 14 erfasst und proportional abhängig von der Auslenkung B ein Hundegangwinkelsignal HGS generiert, das an die Steuereinheit 9 übertragen wird. In der Steuereinheit 9 sind abhängig vom Hundegangwinkelsignal HGS Solllagen SO für die Geräteanbauvorrichtung 3 gespeichert.

Damit der Hubzylinder 7 das Arbeitsgerät 4 in der Außerbetriebsposition AB seitlich in der Solllage SO fixiert, vergleicht die Steuereinheit 9 die zu dem Hundegangwinkelsignal HGS zugehörige Solllage SO der Geräteanbauanordnung 3 mit dem durch den Wegegeber 8 ermittelten tatsächlichen Lagewinkel 27 zwischen dem Schwenkrahmen 40 und dem Fahrzeugrahmen 5. Erkennt die Steuereinheit 9 eine Abweichung generiert sie ein Schwenksignal SW, das an die Hydrauliksteuerung 22 übertragen wird. Die Hydrauliksteuerung 22 regelt die in den Hubzylinder 7 ein- und ausströmenden Ölströme, um die Hublänge L des Hubzylinders derart zu verstellen, dass die Geräteanbauanordnung 3 erfindungsgemäß zurück in die Solllage SO verschwenkt wird, in der der Lagewinkel 27 und der Hundegangwinkel 20 gleichgroß sind und damit das Arbeitsgerät 4 der Fahrtrichtung FR A des Ackerschleppers 1 folgt.

Liegt die von der Steuerung 9 ermittelte Abweichung zwischen Solllage SO und tatsächlich ermitteltem Lagewinkel 27 der Geräteanbauanordnung 3 unterhalb einer maximalen zulässigen Winkelabweichung WA, die in der Steuerung 9 hinterlegt ist, generiert die Steuereinheit kein Schwenksignal SW, so dass keine Verschwenkung der Geräteanbauvorrichtung 3 erfolgt.

Werden beim Wenden des Ackerschleppers 1 im Vorgewende die Räder 16, 17, 18, 19 in einen anderen Hundegangwinkel 20 eingeschlagen, so wird das in die Außerbetriebsposition AB befindliche Arbeitsgerät 4 passend zur neuen Ausrichtung A des Fahrrahmens zur Fahrtrichtung FR ausgerichtet.

Um das Arbeitsgerät 4 in der Arbeitsposition AP mit dem Hubzylinder 7 in einer Schwimmstellung zu halten, hält der Hubzylinder 7 das Arbeitsgerät 4 innerhalb eines Freigangbereichs FB frei pendeln an der Geräteanbauvorrichtung 3 fest. Der Freigabebereich FB ist über ein mit der Steuereinheit 9 verbundenes Bedieneinheit 41 durch den Bediener vorwählbar.

Die Steuereinheit 9 vergleicht den Freigangbereich FB mit dem durch den Wegegeber 8 ermittelten tatsächlichen Lagewinkel 27 zwischen dem Schwenkrahmen 40 und dem Fahrzeugrahmen 5. Erkennt die Steuereinheit 9, dass das Arbeitsgerät 4 den Freigangbereich FB verlässt, generiert sie ein Blockiersignal BS, das an die Hydrauliksteuerung 22 übertragen wird. Die Hydrauliksteuerung 22 steuert die Ventile 23, 24 derart, dass ein Ventil 23, 24 verschlossen wird, sobald sich das Arbeitsorgan 4 aus dem Freigangbereich FB herausbewegt und dadurch das Arbeitsgerät 4 in seiner Bewegung begrenzt wird und anschließend das Ventil 23, 24 wieder geöffnet wird, sobald das Arbeitsorgan 4 wieder innerhalb des Freigangbereichs FB pendelt.

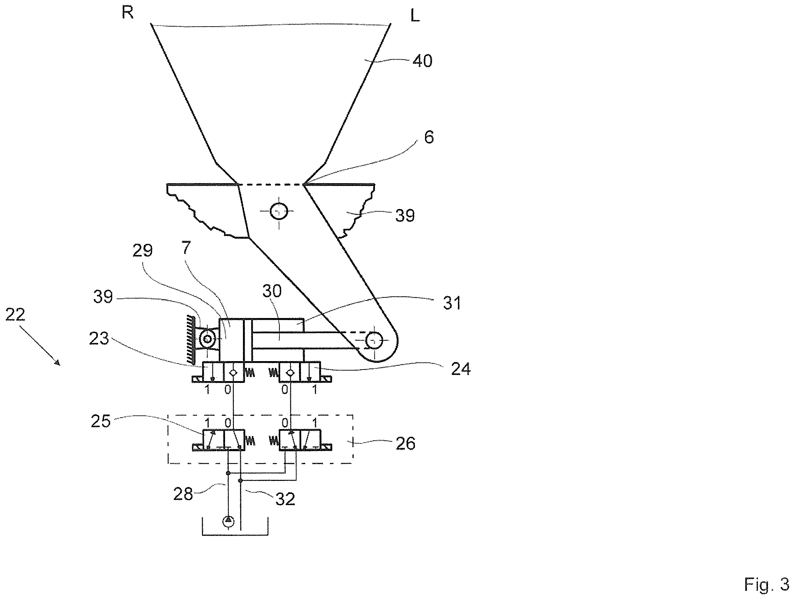

Fig. 3 zeigt den Hydraulikplan der Hydrauliksteuerung 22 mit dem Hubzylinder 7 und den Ventilen 23, 24, 25, 26. Um das über den Hubzylinder 7 lagefixierte Arbeitsgerät 4 nach rechts zu verschwenken, werden die Ventile 23, 24, 26 in eine Schaltstellung 1 und das Ventil 25 in eine Schaltstellung 0 geschaltet. Von der Pumpe 28 fließt ein Ölstrom über das Ventil 25 und das Ventil 23 in den Kolbendruckraum 29 des Hubzylinders 7, wodurch die Kolbenstange 30 des Hubzylinders 7 ausfährt und dadurch die Geräteanbauvorrichtung 3 nach rechts verschwenkt. Gleichzeitig fließt der aus dem Kolbenstangendruckraum 31 des Hubzylinders 7 verdrängte Ölstrom über die Ventile 24, 26 in den Tank 32 zurück.

Für eine Verschwenkung nach links werden die Ventile 23, 24, 25 in eine Schaltstellung 1 und das Ventil 26 in eine Schaltstellung 0 umgeschaltet. Der von der Pumpe 28 geförderte Ölstrom fließt über das Ventil 26 und das Ventil 24 in den Kolbenstangendruckraum 31 des Hubzylinders 7, wodurch die Kolbenstange 30 des Hubzylinders 7 einfährt und dadurch die Geräteanbauvorrichtung 3 nach links verschwenkt. Gleichzeitig fließt der aus dem Kolbendruckraum 29 des Hubzylinders 7 verdrängte Ölstrom über die Ventile 23, 25 in den Tank 32 zurück.

Erkennt die Steuerung 9 keine Abweichung zwischen der Solllage SO und der tatsächlichen Lage des Schwenkrahmens 40 werden alle Ventile 23, 24, 25, 26 wieder geschlossen und die Geräteanbauvorrichtung 3 über den Hubzylinder 7 lagefixiert.

Damit das Stellglied 7 das Arbeitsgerät 4 in der Schwimmstellung hält, müssen die beiden Ventile 23, 24 in eine Schaltstellung 1 und die beiden Ventile 25, 26 in eine Schaltstellung 0 geschaltet sein. Sobald das Arbeitsgerät 4 den vorgegebenen Freigangbereich FB verlässt, wird bei einer Ausschwenkung des Arbeitsgerätes 4 nach rechts entsprechend das Ventil 23 in eine Schaltstellung 0 und bei einer Ausschwenkung des Arbeitsgerätes 4 nach links entsprechend das Ventil 24 in eine Schaltstellung 0 geschaltet und damit die Hublänge L des Hubzylinders 7 begrenzt. Dabei müssen sowohl der Kolbenstangendruckraum 31 als auch der Kolbendruckraum 29 des Hubzylinders 7 mit dem Tank 32 verbunden sein, um Öl aus dem Tank 32 ansaugen zu können.

Es ist denkbar, die Geräteanbauvorrichtung 3 im vorderen Bereich des Ackerschleppers 1 anzuordnen, so dass das Arbeitsgerät 4 vom Ackerschlepper 1 geschoben wird.

Das Arbeitsgerät 4 ist auf an sich bekannte und daher hier nicht näher erläuterte Weise abhängig vom Lenkeinschlag der Räder 16, 17, 18, 18 verschwenkbar, so dass sich beispielweise beim Fahren einer Kurve die äußere Bahnkurve des Arbeitsgerätes 4 verringern lässt.

Ebenso ist es möglich, dass das Arbeitsgerät 4 auf an sich bekannte und daher hier nicht näher erläuterte Weise abhängig von der Drift des Arbeitsgerätes 4 verschwenkbar ist, damit das Arbeitsgerät 4 auch in Hanglagen oder bei ungleichen Bodenverhältnissen der Spur des Arbeitsfahrzeuges 2 folgt.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen.

**Bezugszeichenliste:**

| | | | |
|---|---|---|---|
| 1 | Ackerschlepper | 29 | Kolbendruckraum |
| 2 | Landwirtschaftliches Arbeitsfahrzeug | 30 | Kolbenstange |
| 3 | Geräteanbauvorrichtung | 31 | Kolbenstangendruckraum |
| 4 | Arbeitsgerät | 32 | Tank |
| 5 | Fahrzeugrahmen | 33 | Lenkeinrichtung |
| 6 | Vertikale Drehachse | 34 | Sensor |
| 7 | Hubzylinder | 35 | Hundeganglenkposition |
| 8 | Weggeber | 36 | Bedieneinheit |
| 9 | Steuereinheit | 37 | Pflug |
| 10 | Vorderachse | 38 | Feldboden |
| 11 | Stellglied | 39 | Teilrahmen |
| 12 | Hinterachse | 40 | Schwenkrahmen |
| 13 | Kabine | 41 | Bedieneinheit |
| 14 | Joystick | A | Ausrichtung |
| 15 | Bediener | B | Auslenkung |
| 16 | Rad | FR | Fahrtrichtung |
| 17 | Rad | HGS | Hundegangwinkelsignal |
| 18 | Rad | L | Hublänge |
| 19 | Rad | SO | Solllage |
| 20 | Hundegangwinkel | WS | Wegesignal |
| 21 | Sensor | WA | Winkelabweichung |
| 22 | Hydrauliksteuerung | AB | Außerbetriebssposition |
| 23 | Ventil | TP | Transportposition |
| 24 | Ventil | FB | Freigangbereich |
| 25 | Ventil | BS | Blockiersignal |
| 26 | Ventil | HS | Höhensignal |
| 27 | Lagewinkel | | |
| 28 | Pumpe | | |

## Patentansprüche

1. Vorrichtung zum Führen wenigstens eines über eine Geräteanbauvorrichtung (3) an einem landwirtschaftlichen Arbeitsfahrzeug (2) gekoppelten Arbeitsgerätes (4), wobei das Arbeitsgerät (4) über wenigstens ein Stellglied (11) seitlich verschwenkbar oder fixierbar ist,
**dadurch gekennzeichnet**
**dass** das Stellglied (11) das Arbeitsgerät (4) seitlich lagefixiert, wenn das Arbeitsgerät (4) wenigstens eine Ausserbetriebposition (AB) einnimmt und das Stellglied (11) das Arbeitsgerät (4) seitlich in einer Schwimmstellung hält, wenn das Arbeitsgerät (4) eine Arbeitsposition (AP) einnimmt. wobei die Position des Arbeitsgerätes (4) über einen Lagesensor (44) erfasst wird, das Stellglied (11) als doppelt wirkender Hubzylinder (7) ausgeführt ist, und das Stellglied (11) das Arbeitsgerät (4) in einer Solllage (SO) seitlich lagefixiert und das Stellglied (11) das Arbeitsgerät (4) in der Schwimmstellung innerhalb eines Freigangbereichs (FB) seitlich frei pendelnd an der Geräteanbauvorrichtung (3) hält.

2. Vorrichtung nach Anspruch 1,
**dadurch gekennzeichnet,**
**dass** die Geräteanbauvorrichtung (3) am landwirtschaftlichen Arbeitsfahrzeug (2) angeordnet ist.

3. Vorrichtung nach wenigstens einem der vorhergehenden Ansprüche,
**dadurch gekennzeichnet,**
**dass** das Arbeitsgerät (4) mit Hilfe der Geräteanbauvorrichtung (3) aus der Arbeitsposition (AP) in die Ausserbetriebsposition (AB) anhebbar und umgekehrt absenkbar ist.

4. Vorrichtung nach wenigstens einem der vorhergehenden Ansprüche,
**dadurch gekennzeichnet,**
**dass** an dem Hubzylinder (7) ein Weggeber (8) angeordnet ist, der abhängig von der Hublänge (L) des Hubzylinders (7) ein Wegesignal (WS) generiert.

5. Vorrichtung nach Anspruch 4, **dadurch gekennzeichnet,**
**dass** das Wegesignal (WS) proportional abhängig von einem Lagewinkel (27) zwischen der Geräteanbauvorrichtung (3) und dem Fahrzeugrahmen (5) ist und das Wegesignal (WS) an eine Steuereinheit (9) übertragen wird.

6. Vorrichtung nach wenigstens einem der vorhergehenden Ansprüche,
**dadurch gekennzeichnet,**
**dass** das landwirtschaftliche Arbeitsfahrzeug (2) eine Allradlenkung mit einer lenkbaren Vorderachse (10) und einer lenkbaren Hinterachse (12) aufweist und die Räder (16, 17, 18, 19) beider Achsen (10, 12) zusammen in einer Hundeganglenkposition (35) betreibbar sind.

7. Vorrichtung nach Anspruch 6,
**dadurch gekennzeichnet,**
**dass** in der Hundeganglenkposition (35) ein Hundegangwinkel (20) über einen Sensor (21) an zumindest einem Rad (16-19) erfasst wird, wobei der Sensor (21) ein vom Hundegangwinkel (20) proportional abhängiges Hundegangwinkelsignal (HGS) generiert und das Hundegangwinkelsignal (HGS) an die Steuereinheit (9) übermittelt wird.

8. Vorrichtung nach wenigstens einem der vorhergehenden Ansprüche 6 oder 7, **dadurch gekennzeichnet,**
**dass** das landwirtschaftliche Arbeitsfahrzeug (2) eine vom Bediener betätigbare Lenkeinrichtung (33) aufweist und in der Hundeganglenkposition (35) ein Sensor (34) eine Auslenkung (B) der Lenkeinrichtung (33) erfasst, wobei der Sensor (34) ein von der Auslenkung (B) der Lenkeinrichtung (33) proportional abhängiges Hundgangwinkelsignal (HGS) generiert und das Hundegangwinkelsignal (HGS) an die Steuereinheit (9) übermittelt wird.

9. Vorrichtung nach wenigstens einem der vorhergehenden Ansprüche 7 oder 8, **dadurch gekennzeichnet,**
**dass** in der Steuereinheit (9) abhängig vom Hundegangwinkelsignal (HGS) Solllagen (SO) für die Geräteanbauvorrichtung (3) gespeichert sind.

10. Vorrichtung nach wenigstens einem der vorhergehenden Ansprüche 7 bis 9, **dadurch gekennzeichnet,**
**dass** die Steuereinheit (9) die zu dem Hundegangwinkelsignal (HGS) zugehörige Solllage (SO) der Geräteanbauvorrichtung (3) mit dem Lagewinkel (27) der Geräteanbauvorrichtung (3) vergleicht und bei einer Abweichung ein Schwenksignal (SW) generiert und an eine Hydrauliksteuerung (22) überträgt.

11. Vorrichtung nach wenigstens einem der vorhergehenden Ansprüche,
**dadurch gekennzeichnet,**
**dass** in der Steuereinheit (9) eine maximale Winkelabweichung (WA) gespeichert ist, wobei die Steuereinheit (9) kein Schwenksignal (SW) generiert, wenn die Abweichung zwischen der Solllage (SO) und tatsächlich ermitteltem Lagewinkel (27) unterhalb der maximalen Winkelabweichung (WA) liegt.

12. Vorrichtung nach wenigstens einem der vorhergehenden Ansprüche,
**dadurch gekennzeichnet,**
**dass** die Steuereinheit (9) mit einer Bedieneinheit (41) verbunden ist, wobei über die Bedieneinheit (36) der Freigangbereich (FB) vorgebbar ist.

13. Vorrichtung nach wenigstens einem der vorhergehenden Ansprüche,
**dadurch gekennzeichnet,**
**dass** die Steuereinheit (9) den vorgegebenen Freigabebereich (FB) mit dem Lagewinkel (27) der Geräteanbauvorrichtung (3) vergleicht und bei einer Überschreitung des Freigangbereichs (FB) ein Blockiersignal (BS) generiert und an die Hydrauliksteuerung (22) überträgt.

14. Vorrichtung nach wenigstens einem der vorhergehenden Ansprüche,
**dadurch gekennzeichnet,**
**dass** die Hydrauliksteuerung (22) durch die in den Hubzylinder (7) ein- und ausströmende Ölstrome die Hublänge (L) des Hubzylinders (7) regelt und dadurch das Arbeitsgerät (4) in die Solllage (SO) verschwenkt oder innerhalb des Freigabebereich (FB) frei pendeln lässt.

15. Vorrichtung nach wenigstens einem der vorhergehenden Ansprüche,
**dadurch gekennzeichnet,**
**dass** die Geräteanbauvorrichtung (3) abhängig von einem Lenkeinschlag der Räder (17, 18, 18, 19) des landwirtschaftlichen Arbeitsfahrzeugs (2) verschwenkbar ist.

16. Vorrichtung nach wenigstens einem der vorhergehenden Ansprüche,
**dadurch gekennzeichnet,**
**dass** die Geräteanbauvorrichtung (3) abhängig von der Drift des Arbeitsgerätes (4) verschwenkbar ist.

## Claims

1. Apparatus for guiding at least one working implement coupled by way of an implement attachment device (3) to an agricultural working vehicle (2), wherein the working implement (4) is laterally pivotable or fixable by way of at least one adjusting member (11),
**characterised in that**
the adjusting member (1) laterally fixes the working implement (4) in position when the working implement (4) assumes at least one inoperative position (AB) and the adjusting member (11) holds the working implement (4) laterally in a floating position when the working implement (4) assumes a working position (AP), wherein the position of the working implement (4) is detected by way of a position sensor (44), the adjusting member (11) is in the form of a double-acting stroke cylinder (7) and the adjusting member (11) laterally fixes the working implement (4) in position in a reference position (SO) and the adjusting member (11) holds the working implement (4) in the floating position laterally freely swinging within a free-movement range (FB) on the implement attachment device (3).

2. Apparatus according to claim 1
**characterised in that**
the implement attachment device (3) is arranged on the agricultural working vehicle (2).

3. Apparatus according to at least one of the preceding claims
**characterised in that**
the working implement (4) can be lifted out of the working position (AP) into the inoperative position (AB) and can be conversely lowered by means of the implement attachment device (3).

4. Apparatus according to at least one of the preceding claims
**characterised in that**
disposed on the stroke cylinder (7) is a travel sensor (8) which generates a travel signal (WS) in dependence on the stroke length (L) of the stroke cylinder (7).

5. Apparatus according to claim 4
**characterised in that**
the travel signal (WS) is proportionally dependent on a position angle (27) between the implement attachment device (3) and the vehicle frame (5) and the travel signal (WS) is transmitted to a control unit (9).

6. Apparatus according to at least one of the preceding claims
**characterised in that**
the agricultural working vehicle (2) has all-wheel steering with a steerable front axle (10) and a steerable rear axle (12) and the wheels (16, 17, 18,19) of both axles (10, 12) are operable together in a crab steering position (35).

7. Apparatus according to claim 6
**characterised in that**
in the crab steering position (35) a crab angle (20) is detected by way of a sensor (21) at at least one wheel (16-19), wherein the sensor (21) generates a crab angle signal (AGS) proportionally dependent on the crab angle (20) and the crab angle signal (HGS) is communicated to the control unit (9).

8. Apparatus according to at least one of preceding claims 6 and 7
**characterised in that**
the agricultural working vehicle (2) has a steering arrangement (33) actuable by the operator and in the crab steering position (35) a sensor (34) detects a deflection (B) of the steering arrangement (33), wherein the sensor (34) generates a crab angle signal (HGS) proportionally dependent on the deflection (B) of the steering arrangement (33) and the crab angle signal (HGS) is communicated to the control unit (9).

9. Apparatus according to at least one of preceding claims 7 and 8
**characterised in that**
reference positions (SO) for the implement attachment device (3) are stored in the control unit (9) in dependence on the crab angle signal (HGS).

10. Apparatus according to at least one of preceding claims 7 to 9
**characterised in that**
the control unit (9) compares the reference position (SO) of the implement attachment device (3), that is associated with the crab angle signal (HGS), to the position angle (27) of the implement attachment device (3) and in the event of a deviation generates a pivot signal (SW) and transmits it to a hydraulic control means (22).

11. Apparatus according to at least one of the preceding claims
**characterised in that**
a maximum angle deviation (WA) is stored in the control unit (9), wherein the control unit (9) does not generate a pivot signal (SW) if the deviation between the reference position (SO) and the actually ascertained position angle (27) is below the maximum angle deviation (WA).

12. Apparatus according to at least one of the preceding claims
**characterised in that**
the control unit (9) is connected to an operating unit (41), wherein the free-movement range (FB) can be predetermined by way of the operating unit (36).

13. Apparatus according to at least one of the preceding claims
**characterised in that**
the control unit (9) compares the predetermined free-movement range (FB) to the position angle (27) of the implement attachment device (3) and when the free-movement range (FB) is exceeded it generates a blocking signal (BS) and transmits it to the hydraulic control means (22).

14. Apparatus according to at least one of the preceding claims
**characterised in that**
the hydraulic control means (22) regulates the stroke length (L) of the stroke cylinder (7) by the oil flows flowing into and out of the stroke cylinder (7) and thereby pivots the working implement (4) into the reference position (SO) and/or leaves it swinging freely within the free-movement range (FB).

15. Apparatus according to at least one of the preceding claims
**characterised in that**
the implement attachment device (3) is pivotable in dependence on a steering lock of the wheels (16, 17, 18, 19) of the agricultural working vehicle (2).

16. Apparatus according to at least one of the preceding claims
**characterised in that**
the implement attachment device (3) is pivotable in dependence on the drift of the working implement (4).

## Revendications

1. Dispositif de guidage d'au moins un outil de travail (4) couplé à un véhicule de travail agricole (2) par l'intermédiaire d'un dispositif d'attelage d'outil (3), l'outil de travail (4) pouvant être déplacé ou immobilisé latéralement par l'intermédiaire d'au moins un actionneur (11), **caractérisé en ce que** l'actionneur (11) immobilise latéralement l'outil de travail (4) lorsque l'outil de travail (4) adopte au moins une position hors service (AB), et l'actionneur (11) maintient l'outil de travail (2) latéralement dans une position flottante lorsque l'outil de travail (4) adopte une position de travail (AP), la position de l'outil de travail (4) étant détectée par l'intermédiaire d'un capteur de position (44), l'actionneur (11) étant conformé en vérin hydraulique à double effet (7), et l'actionneur (11) bloquant latéralement l'outil de travail (4) dans sa position de consigne (SO) et, dans la position flottante, l'actionneur (11) maintenant l'outil de travail (4) sur le dispositif d'attelage d'outil (3) en libre oscillation latérale à l'intérieur d'une zone de libre déplacement (FB) .

2. Dispositif selon la revendication 1, **caractérisé en ce que** le dispositif d'attelage d'outil (3) est disposé sur le véhicule de travail agricole (2) .

3. Dispositif selon au moins une des revendications précédentes, **caractérisé en ce que**, à l'aide du dispositif d'attelage d'outil (3), l'outil de travail (4) peut être soulevé de la position de travail (AP) vers la position hors service (AB) et, à l'inverse, abaissé.

4. Dispositif selon au moins une des revendications précédentes, **caractérisé en ce que** sur le vérin hydraulique (7) est disposé un capteur de course (8) qui génère un signal de course (WS) en fonction de la longueur de course (L) du vérin hydraulique (7).

5. Dispositif selon la revendication 4, **caractérisé en ce que** le signal de course (WS) est proportionnel à un angle de positionnement (27) entre le dispositif d'attelage d'outil (3) et le bâti de véhicule (5), et **en ce que** le signal de course (WS) est transmis à une unité de commande (9) .

6. Dispositif selon au moins une des revendications précédentes, **caractérisé en ce que** le véhicule de travail agricole (2) comporte une direction à quatre roues avec un essieu avant directeur (10) et avec un essieu arrière directeur (12), et les roues (16, 17, 18, 19) des deux essieux (10, 12) sont exploitable ensemble dans une position de marche en crabe (35).

7. Dispositif selon la revendication 6, **caractérisé en ce que**, dans la position de marche en crabe (35), un angle de marche en crabe (20) est détecté sur au moins une roue (16-19) par l'intermédiaire d'un capteur (21), le capteur (21) générant un signal d'angle de marche en crabe (HGS) proportionnel à l'angle de marche en crabe (20), et le signal d'angle de marche en crabe (HGS) étant transmis à l'unité de commande (9) .

8. Dispositif selon au moins une des revendications précédentes 6 ou 7, **caractérisé en ce que** le véhicule de travail agricole (2) comporte un équipement directeur (33) actionné par l'utilisateur et, dans la position de marche en crabe (35), un capteur (34) détecte un débattement (B) de l'équipement directeur (33), le capteur (34) générant un signal d'angle de marche en crabe (HGS) proportionnel au débattement (B) de l'équipement directeur (33), et le signal d'angle de marche en crabe (HGS) étant transmis à l'unité de commande (9).

9. Dispositif selon au moins une des revendications précédentes 7 ou 8, **caractérisé en ce que** dans l'unité de commande (9) sont mémorisées des positions de consigne (SO) pour le dispositif d'attelage d'outil (3) en fonction du signal d'angle de marche en crabe (HGS).

10. Dispositif selon au moins une des revendications précédentes 7 à 9, **caractérisé en ce que** l'unité de commande (9) compare la position de consigne (SO) du dispositif d'attelage d'outil (3) correspondant au signal d'angle de marche en crabe (HGS) avec l'angle de positionnement (27) du dispositif d'attelage d'outil (3) et, en présence d'un d'écart, génère un signal de pivotement (SW) et le transmet à une commande hydraulique (22).

11. Dispositif selon au moins une des revendications précédentes, **caractérisé en ce que** dans l'unité de commande (9) est mémorisé un écart angulaire maximal (WA), l'unité de commande (9) ne générant pas de signal de pivotement (SW) si l'écart entre la position de consigne (SO) et l'angle de positionnement réellement mesuré (27) est inférieur à l'écart angulaire maximal (WA).

12. Dispositif selon au moins une des revendications précédentes, **caractérisé en ce que** l'unité de commande (9) est connectée à une unité d'actionnement (41), la zone de libre déplacement (FB) pouvant être prescrite par l'intermédiaire de l'unité d'actionnement (36).

13. Dispositif selon au moins une des revendications précédentes, **caractérisé en ce que** l'unité de commande (9) compare la zone de libre déplacement prescrite (FB) avec l'angle de positionnement (27) du dispositif d'attelage d'outil (3) et, en cas de dépassement de la zone de libre déplacement (FB), génère un signal de blocage (BS) et le transmet à la commande hydraulique (22).

14. Dispositif selon au moins une des revendications précédentes, **caractérisé en ce que** la commande hydraulique (22) régule la longueur de course (L) du vérin hydraulique (7) par l'intermédiaire des flux d'huile entrant et sortant du vérin hydraulique (7) et amène ainsi l'outil de travail (4) dans la position de consigne (SO) ou le laisse osciller librement à l'intérieur d'une zone de libre déplacement (FB).

15. Dispositif selon au moins une des revendications précédentes, **caractérisé en ce que** le dispositif d'attelage d'outil (3) peut pivoter en fonction d'un braquage des roues (17, 18, 18, 19) du véhicule de travail agricole (2).

16. Dispositif selon au moins une des revendications précédentes, **caractérisé en ce que** le dispositif d'attelage d'outil (3) peut pivoter en fonction de la dérive de l'outil de travail (4).
